Europäisches Patentamt

European Patent Office

Office européen des brevets

(19)

(11) Veröffentlichungsnummer : **0 125 562**
**B1**

(12) **EUROPÄISCHE PATENTSCHRIFT**

(45) Veröffentlichungstag der Patentschrift :
04.03.87

(51) Int. Cl.⁴ : **B 60 H   1/00**

(21) Anmeldenummer : **84104952.1**

(22) Anmeldetag : **03.05.84**

(54) **Luftversorgungsvorrichtung für die Fahrerkabine eines Fahrzeuges.**

(30) Priorität : **16.05.83 US 495320**

(43) Veröffentlichungstag der Anmeldung :
**21.11.84 Patentblatt 84/47**

(45) Bekanntmachung des Hinweises auf die Patenterteilung : **04.03.87 Patentblatt 87/10**

(84) Benannte Vertragsstaaten :
**BE DE FR GB IT**

(56) Entgegenhaltungen :
**EP-A- 0 042 597**
**"Precleaner for cabs" Accessory Sales, Form no. 90182, Aug. 1982**

(73) Patentinhaber : **DEERE & COMPANY**
**1 John Deere Road**
**Moline Illinois 61265 (US)**

(72) Erfinder : **Warman, Bruce Lyle**
**337 Sylvan Court**
**Silvis Illinois 61282 (US)**
Erfinder : **Dailey, Carl William**
**1607 Skyline Drive**
**Bettendorf Iowa 52722 (US)**
Erfinder : **Johnson, Floyd Delane**
**2612 45th Street**
**Moline Illinois 61265 (US)**

(74) Vertreter : **Sartorius, Peter et al**
**DEERE & COMPANY European Office, Patent Department Postfach 503 Steubenstrasse 36-42**
**D-6800 Mannheim 1 (DE)**

**Beschreibung**

Die Erfindung bezieht sich auf eine Luftversorgungsvorrichtung für die Fahrerkabine eines Fahrzeuges mit einem ersten Gebläse zum Ansaugen von Frischluft außerhalb der Fahrerkabine, einer sich an das Gebläse anschließenden, aus Kühler und Heizung gebildeten Klimaeinrichtung, einem zweiten Gebläse, sowie einer im Inneren der Fahrerkabine vorgesehenen Verteilervorrichtung wobei die angesaugte Frischluft über einen sich stromabwärts von dem ersten Gebläse anschließenden Vorreiniger und mindestens einen dem Gehäuse der Klimaeinrichtung zugeordneten Filter geleitet wird.

Es ist bereits ein Vorreiniger für die Fahrerkabine eines Schleppers bekannt, der über ein Gebläse Frischluft bon außen ansaugt und einem Gehäuse zuführt, das mit einer ersten Auslaßöffnung zur Abgabe von vorgereinigter Frischluft für die Fahrerkabine und einer zweiten Auslaßffnung zum Abführen von Schmutzpartikeln, die in der Luft enthalten sind, ausgerüstet ist. Der Vorreiniger steht mit seiner Auslaßöffnung lediglich mit einer Versorgungsleitung in Verbindung, die einen weiteren Filter aufweist, so daß die Frischluft abschließend gereinigt wird, bevor sie in das Innere der Fahrerkabine eintritt (Druckschrift « Precleaner for cabs » von Accessory Sales, Incorporated, Form No. 90182, August 1982).

Ferner ist eine Luftversorgungsvorrichtung der eingangs aufgeführten Art bekannt (US-A-4 344 356), die ein erstes Gebläse zum Ansaugen von Frischluft aufweist, das über eine Versorgungsleitung und Filterelemente mit einer Klimaeinrichtung verbunden ist, an die sich ein zweites Gebläse anschließt, dessen Drehzahl zur Förderung der Luft änderbar ist. Vor dem ersten Gebläse im Bereich der Einlaßöffnung kann ein Vorreiniger angeordnet sein. Diese Plazierung hat jedoch den Nachteil, daß in der Ansaugleitung des Gebläses Kavitation auftreten kann. Ferner wird die Wartung erschwert, da die einzelnen Filter an verschieden weit auseinanderliegenden Stellen in der Fahrerkabine untergebracht sind.

Der Erfindung liegt die Aufgabe zugrunde, alle zur Luftversorgungsvorrichtung gehörenden Komponenten derart auszubilden und anzuordnen, daß eine Unterbringung auf kleinstem Raum möglich ist, wobei gleichzeitig die Klimatisierung bzw. die Luftversorgung der Fahrerkabine nicht beeinträchtigt wird und zum anderen eine leichte Zugänglichkeit der einzelnen Komponenten der Luftversorgungsvorrichtung gewährleistet wird.

Diese Aufgabe ist dadurch gelöst worden, daß das zweite Gebläse klimatisierte Luft in die Fahrerkabine zuführt, und der Vorreiniger mit mindestens zwei Auslässen versehen ist, wobei der eine Auslaß Luft mit Schmutzpartikeln nach außen zur Atmosphäre und der andere Auslaß vorgereinigte Luft über den ersten Luftfilter in das Gehäuse leitet, der einen zweiten stromabwärts vom ersten Filter ebenfalls im Gehäuse vorgesehenen, die aus der Fahrerkabine in das Gehäuse eintretende Luft aufnehmenden Luftfilter aufweist, an den sich stromabwärts die Klimaeinrichtung mit dem zweiten Gebläse anschließt. Durch die vorteilhafte Anordnung des Vorreinigers, der hinter dem ersten Filter vorgesehen ist, lassen sich die gröberen Schmutzbestandteile der angesaugten Luft auf einfache Weise entfernen. Auch der nachgeschaltete Filter läßt sich von der gleichen Stelle aus ohne weiteres warten. Durch die Verwendung eines zweiten stromabwärts liegenden Filters läßt sich auf einfache Weise die Luft aus der Fahrerkabine absaugen und gemeinsam mit der gereinigten Frischluft einer Klimaeinrichtung zuführen, so daß nach Passieren der Klimaeinrichtung die Luft erneut der Fahrerkabine über das zweite Gebläse zugeführt werden kann. Eine kompakte Anordnung der einzelnen Komponenten der Luftversorgungsvorrichtung erhält man dadurch, daß in dem Gehäuse zur Aufnahme der Klimaeinrichtung das erste Gebläse zum Ansaugen von Frischluft und daran anschließend der Vorreiniger angeordnet sind und das zweite Gebläse eine die Drehzahl des Gebläses verändernde Einrichtung sowie einen in das Innere der Fahrerkabine hineinreichenden, mit der Verteilervorrichtung verbundenen Auslaßstutzen aufweist. Hierdurch wird ferner eine optimale Luftversorgung der Fahrerkabine gewährleistet. Vorteilhaft ist es außerdem, daß zwischen den beiden ersten dem Vorreiniger nachgeschalteten Filtern und dem zweiten Gebläse die Klimaeinrichtung mit einem Kühler bzw. Verdampfer und einer Heizung vorgesehen ist. Ferner ist es vorteilhaft, daß das erste Gebläse, der Vorreiniger, der erste Filter, die Klimaeinrichtung, das zweite Gebläse sowie die Verteilervorrichtung mit ihren Ein- und Auslässen in Strömungsrichtung gesehen hintereinander geschaltet sind.

Damit möglichst wenig Schmutzanteile mit der Frischluft über das erste Gebläse angesaugt werden, ist es vorteilhaft, daß die Lufteinlaßöffnung des ersten Gebläses im oberen Bereich der Fahrerkabine und die Auslaßöffnung zum Anschluß an die Verteilerleitung stromabwärts vom zweiten Gebläse angeordnet ist.

In weiterer Ausgestaltung der Erfindung ist es vorteilhaft, daß das Gehäuse zur Aufnahme des Vorreinigers, der beiden Filter, der klimaeinrichtung und des zweiten Gebläses auf dem Boden der Fahrerkabine hinter dem Fahrersitz und im Bereich der Rückwand angeordnet ist. Da alle wesentlichen Komponenten der Luftversorgungsvorrichtung in einem einzigen geschlossenen Gehäuse unterhalb des Fahrersitzes angeordnet sind, kann mit einem Minimum an Platz ausgekommen werden, wobei gleichzeitig durch die kompakte Anordnung der einzelnen Komponenten der Luftversorgungsvorrichtung im Bereich der Rückwand der Fahrerkabine eine einfache Wartung der Luftversorgungsvorrichtung möglich ist, da diese Teile alle von einer Stelle aus zugänglich sind.

Vorteilhaft ist es ferner, daß der Vorreiniger sich zur Auslaßöffnung verjüngt und zahlreiche mit dem Inneren des Gehäuses in Verbindung stehende weitere Auslaßöffnungen aufweist. Da der Vorreiniger sich zu seiner Auslaßöffnung hin verjüngt, wird ein geringer Druck im Vorreiniger erzeugt, so daß ein Teil der Luft über die Auslaßöffnungen im Gehäuse des Vorreinigers in die Filterkammer gelangt, während der Teil der Luft, der weiterhin die Schmutzpartikel enthält, nach außen hin abgeführt wird. Somit läßt sich auf einfache Weise der dem Vorreiniger nachgeschaltete Filter mit vorgereinigter Luft versorgen.

Vorteilhaft ist es ferner, daß das Gehäuse aus einer Filterkammer zur Aufnahme des Vorreinigers und einer Mischkammer mit Einlaßöffnungen zur Aufnahme der beiden Luftfilter gebildet ist, wobei in der Auslaßöffnung der Mischkammer der Kühler der Klimaeinrichtung vorgesehen ist. Eine einfache Wartung der Luftversorgungsvorrichtung wird dadurch gewährleistet, daß das Gehäuse aus einer oberen und einer unteren Gehäusehälfte besteht, die miteinander lösbar verbunden sind, wobei die untere Gehäusehälfte auf dem Boden der Fahrerkabine angeordnet ist. Dabei ist es vorteilhaft, daß der Auslaßkanal des Vorreinigers mit seiner Auslaßöffnung sich vertikal nach unten durch den Boden der Fahrerkabine erstreckt und daß die Filterkammer eine Einlaßklappe aufweist. Außerdem ist es vorteilhaft, daß der Vorreiniger zwischen zwei genenüberliegenden Seitenwänden der Filterkammer angeordnet ist, wobei der Einlaß des Vorreinigers in der oberen Wand und die Auslaßöffnung in der unteren als Boden der Fahrerkabine ausgebildeten Wand angeordnet ist, und daß der Vorreiniger im Bereich seiner Auslaßöffnung über ein Dichtelement gegenüber dem Boden abgedichtet ist.

Im folgenden wird die Erfindung anhand von lediglich einen Ausführungsweg darstellenden Zeichnungen näher erläutert. Es zeigt :

Figure 1. eine Fahrerkabine einer Erntebergungsmaschine in Seitenansicht,

Figure 2 eine schematische Darstellung der Luftversorgungsleitungen für Frischluft in der Ansicht von hinten gemäß Fig. 1,

Figure 3 die in Fig. 2 schematisch dargestellte Luftversorgungsvorrichtung in einem größeren Maßstab,

Figure 4 eine Vorderansicht entlang der Linie 4-4 gemäß Fig. 3,

Figure 5 eine Teilrückansicht der Luftversorgungsvorrichtung entlang der Linie 5-5 gemäß Fig. 3 mit einem zugehörigen Gebläse und einem Vorreiniger,

Figure 6 eine Ansicht entlang der Linie 6-6 gemäß Fig. 5.

In der Zeichnung ist mit 10 ein Boden, mit 12 eine Rückwand und mit 14 gegenüberliegende Seitenwände sowie mit 16 eine Fahrerkabine eines in der Zeichnung nicht dargestellten Mähdreschers bezeichnet, die in der linken Seitenwand 14 eine Eingangstür 18 aufweist. In der Fahrerkabine 16 ist ein Fahrersitz 20 auf einer Tragvorrichtung 22 hinter einem Lenkrad 24 angeordnet, dem zahlreiche in der Zeichnung jedoch nicht dargestellte Bedienungs- und Kontrollorgane zugeordnet sind.

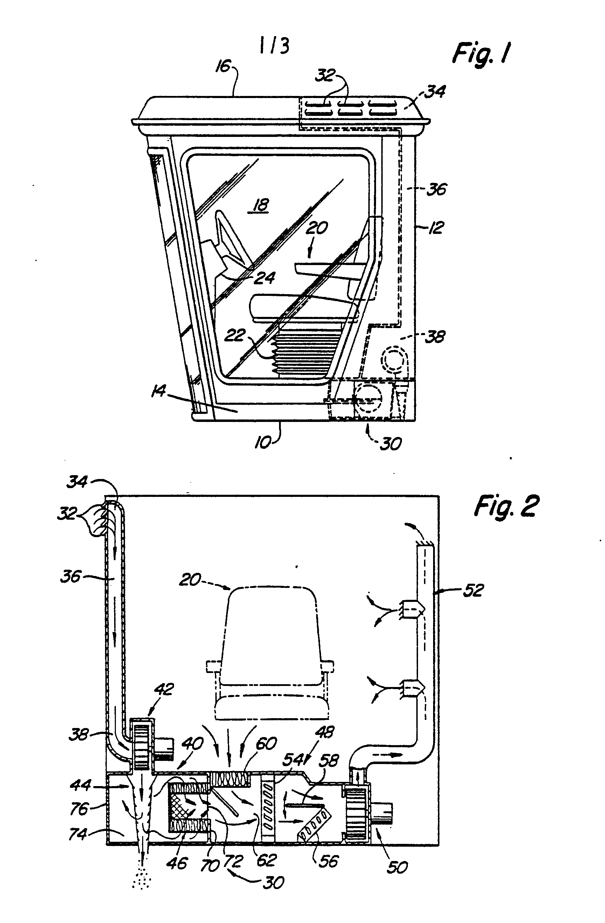

In Fig. 1 ist die generelle Anordnung einer Luftversorgungsvorrichtung 30 dargestellt. Der Hauptanteil der Luftversorgungsvorrichtung 30 ist auf dem Boden 10 der Fahrerkabine 16 im Bereich der Rückwand 12 angeordnet. Frischluft tritt über Lufteinlaßöffnungen 32 in eine Kammer 34 im Dach der Fahrerkabine 16 ein und gelangt dann über eine vertikal verlaufende, im Bereich der linken Ecke der Rückwand 12 vorgesehene Leitung 36 an einen Einlaßstutzen 38 eines Gebläses 42.

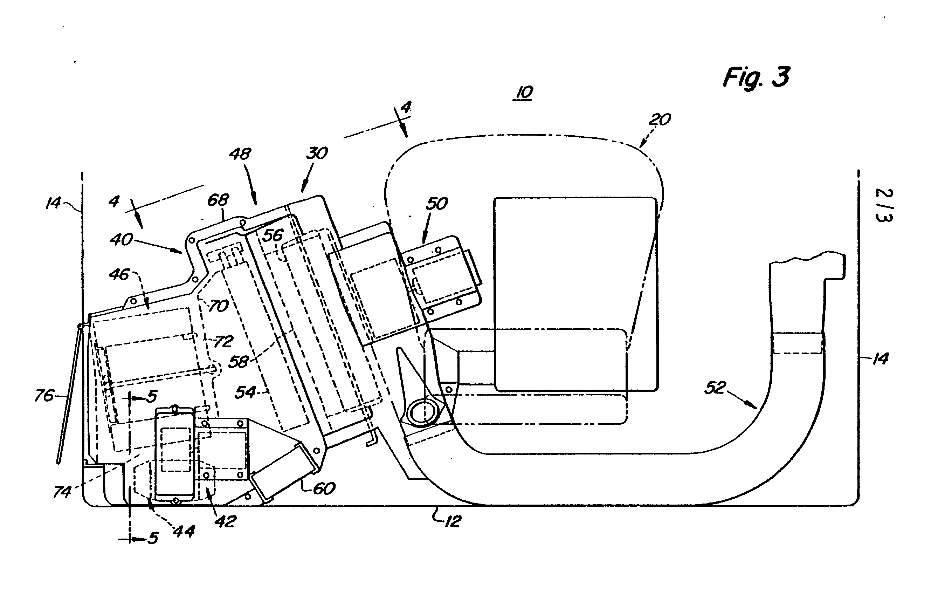

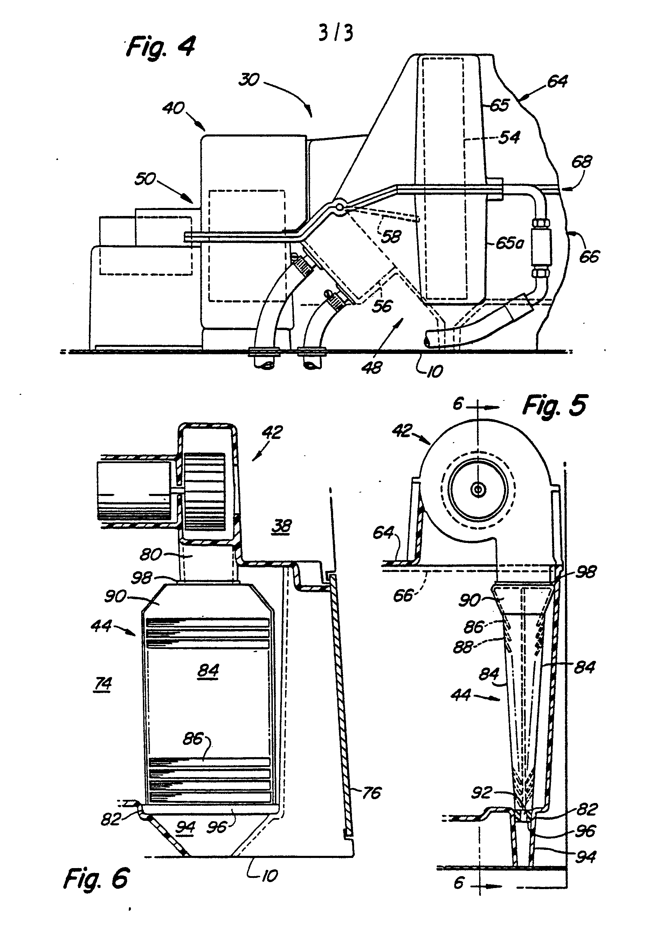

Die einzelnen Teile, ihre Zuordnung sowie der funktionnelle Zusammenhang der Teile der Luftversorgungsvorrichtung 30 sind schematisch in Fig. 2 dargestellt. Die Luftversorgungsvorrichtung 30 weist ein Gehäuse 40 auf, an das das Gebläse 42 angeschlossen ist und in dem ein Vorreiniger 44, ein Frischluftfilter 46 sowie ein Wärmetauscher 48 und ein weiteres Gebläse 50 vorgesehen sind, das zur Luftmittelversorgung einer Verteilerleitung 52 dient. Der Wärmetauscher bzw. die Klimaeinrichtung 48 enthält einen Verdampfer 54, eine Heizwendel 56 sowie eine verstellbar angeordnete Leitplatte 58. Die Rückführung der Luft in das Gehäuse 40 erfolgt über einen Luftfilter 60 in eine Mischkammer 62 stromabwärts von dem Frischluftfilter 46. In den Figuren 3 und 4 ist die tatsächliche Anordnung der Luftversorgungsvorrichtung 30 auf dem Boden 10 der Fahrerkabine 16 in der linken unteren Ecke unmittelbar hinter dem Fahrersitz 20 dargestellt. Die einzelnen Komponenten, wie z. B. der Frischluftfilter 46, der Wärmetauscher 48, das Gebläse 50, sind in vorteilhafter Weise koaxial zueinander ausgerichtet, wobei sich die durch die einzelnen Komponenten verlaufende Achse mit Bezug auf den Boden 10 der Fahrerkabine diagonal erstreckt (siehe Fig. 3).

Aus den Figuren 3 und 4 geht die kompakte Anordnung der Luftversorgungsvorrichtung 30 hervor, und sie zeigen, wie leicht bei einer derartigen Anlage der Service durchzuführen ist, was sich auch daraus ergibt, daß das Gehäuse 40 horizontal geteilt ist und aus einem oberen und unteren Gehäuseteil 64 und 66 besteht, die Flansche 68 aufweisen, die über Schraubenbolzen lösbar miteinander verbunden sind.

Der untere Gehäuseteil 66 ist gemeinsam mit dem oberen Gehäuseteil 64 über in der Zeichnung nicht dargestellte Schraubenbolzen mit dem Boden 10 der Fahrerkabine 16 verbunden. Hierzu weist der Gehäuseteil 64 entsprechende Flansche bzw. Halterungen auf, die zur Aufnahme von Schraubenbolzen und somit zur Befestigung des unteren Gehäuseteils 66 auf dem Boden 10 dienen. Ferner sind in den Gehäuseteilen 64 bzw. 66 Aussparungen vorgesehen, in denen die einzelnen Teile der Klimaanlage 48 aufgenommen werden können. Beispielsweise ist der Verdampfer 54 der Klimaanlage 48 in entsprechenden Aussparungen 65a und 65 der Gehäuseteile 64 und 66 (siehe Fig. 4) aufgenommen.

Ein im Gehäuseteil 66 liegender Flansch bildet außerdem eine Querwand 70 und somit mit den übrigen Gehäuseteilen einen Aufnahmeteil bzw. eine Kammer 72 zur Aufnahme des Frischluftfilters 46. Der innere Raum des Gehäuses 40 stromaufwärts von der Wand 70 ist als Filterkammer 74 bezeichnet. Der Vorreiniger 44 erstreckt sich vertikal durch die Kammer 74 unmittelbar hinter dem Frischluftfilter 46. Das stromaufwärts liegende Ende des Gehäuses 40 ist mit der linken Seitenwand 14 der Fahrerkabine 16 verbunden, wobei eine Klappe 76 im Gehäuse 40 auch außerhalb der Fahrerkabine einen leichten Zugang zur Filterkammer 74 ermöglicht.

Der Vorreiniger 44 (siehe Fig. 5 und 6) ist zwischen einem Gebläseauslaßstutzen 80, der in dem oberen Gehäuseteil 64 eingeformt ist, und einer Aussparung 82 angeordnet, die in dem Boden des unteren Gehäuseteils 66 eingeformt ist. Der Vorreiniger 44 besteht aus einem im Querschnitt etwa rechteckförmigen, sich nach unten verjüngenden Gehäuseteil 84, der mit zahlreichen Öffnungen 86 ausgestattet ist, die aus jeweils zwei gegenüberliegenden Seitenteilen gebildet sind und somit die schlitzförmigen Öffnungen bilden. Ein sich nach unten erstreckender trichterförmiger Verbindungsteil 90 ist zwischen dem Gebläseauslaßstutzen 80 des Gebläses 42 und dem oberen Ende des Gehäuseteils 84 angeordnet. Am unteren Ende des Gehäuseteils 84 befindet sich ein Auslaßschlitz 92, der in eine Aussparung 82 im Boden 10 mit sich daran anschließenden trichterförmig ausgebildeten Auslaßstutzen 94 mündet. Das untere Ende des Gehäuseteils 84 stützt sich über ein Dichtungselement 96 in der Aussparung 82 ab. Das Dichtungselement 96 wirkt gleichzeitig auch als Druckfeder, ermöglicht die einfache Einführung und Ausrichtung des Vorreinigers 44 zwischen der Auslaßöffnung 98 des Gebläses 42 und der Aussparung 82 und gewährleistet einen einwandfreien Sitz zwischen diesen Teilen. Auf diese Weise läßt sich der Ein- und Ausbau des Vorreinigers 44 relativ leicht durchführen.

Im Arbeitseinsatz ist die Eingangstür 18 der Fahrerkabine 16 geschlossen, so daß bei Betätigung des Schalters der Klimaanlage 48 bzw. der Luftversorgungsvorrichtung 30 über das Gebläse 42 Frischluft durch die Lufteinlaßöffnungen 32 angesaugt wird. Größere Schmutzteile, beispielsweise Laub oder andere in der Luft enthaltene Verunreinigungen, die in die Leitung 36 gelangen, werden über den Vorreiniger 44 wieder ausgeschieden. Durch die hohe axiale Luftgeschwindigkeit werden die in der Luft enthaltenen Schmutzanteile mit einer solchen Geschwindigkeit nach unten bewegt, daß sie nach unten ausgeschieden werden und nicht in die Filterkammer 74 gelangen. Aufgrund ihres Massenträgheitsmomentes werden die Schmutzteile nicht mittels des Luftstromes umgelenkt und gelangen daher nicht durch die Öffnungen 86 des Gehäuseteils 84. Durch die trichterförmige Ausführung des Vorreinigers 44 wird eine hohe Austrittsgeschwindigkeit im Vorreiniger 44 erreicht und ein entsprechender statischer Druck aufgebaut, so daß ein größerer Anteil der Luft aus dem Gebläse 42 durch die Öffnungen 86 in den Seitenteilen 88 des Vorreinigers 44 gedrückt wird. Bei einem Vorreiniger dieser Bauart tritt ein 15 prozentiger Verlust der eingeführten Luft auf. Ein Teil der Luft tritt vertikal aus dem Auslaßschlitz 92 des Gehäuses 84 im Boden 10 der Fahrerkabine 16 aus und zieht dabei 80 bis 95 % der in der Luft enthaltenen Staubteile mit sich.

Aufgrund der in der Fahrerkabine 16 enthaltenen Leckloch-Öffnungen tritt so viel Luft in die Fahrerkabine 16 ein, daß in der Fahrerkabine 16 eine gute Luftqualität gewährleistet ist. Normalerweise arbeitet das Gebläse 42 ständig, wenn die Fahrerkabine 16 geschlossen ist und der Mähdrescher sich im Arbeitseinsatz befindet. Das Gebläse 50, das mit unterschiedlicher Drehzahl arbeiten kann, zieht im Arbeitseinsatz Luft durch den Luftfilter 60 und vermischt diese Luft mit frischer Luft, die in die Filterkammer 74 gelangt, die über den Frischluftfilter 46 geleitet wird. Der sich daraus ergebende kombinierte Luftstrom gelangt über den Wärmetauscher 48, der entweder die Luft kühlt oder erhitzt, je nachdem wie die Luftversorgungsvorrichtung ausgestattet ist. Die entsprechend gekühlte bzw. erhitzte Luft wird dann über die Verteilerleitungen 52 in das Innere der Fahrerkabine 16 abgegeben. Durch die in Serie angeordneten einzelnen Teile der Luftversorgungsvorrichtung 30 treten zwischen der angesaugten und der abgegebenen Luft nur relativ kleine Verluste auf. Durch die vorteilhafte Anordnung des Vorreinigers 44 im unmittelbaren Bereich des Frischluftfilters 46 in der Filterkammer 74 ist eine gute Zugänglichkeit zu den Filtern mittels einer einzigen Klappe 76 möglich, die im Gehäuse 40 vorgesehen ist.

**Patentansprüche**

1. Luftversorgungsvorrichtung (30) für die Fahrerkabine (16) eines Fahrzeuges mit einem ersten Gebläse (42) zum Ansaugen von Frischluft außerhalb der Fahrerkabine, einer sich an das Gebläse anschließenden, aus Kühler (54) und Heizung (56) gebildeten Klimaeinrichtung, einem zweiten Gebläse, sowie einer im Inneren der Fahrerkabine vorgesehenen Verteilervorrichtung (52), wobei die angesaugte Frischluft über einen sich stromabwärts von dem ersten Gebläse (42) anschließenden Vorreiniger und mindestens einen dem Gehäuse (40) der Klimaeinrichtung (48) zugeordneten Filter geleitet wird, dadurch gekennzeichnet, daß das zweite Gebläse (50) klimatisierte Luft in die Fahrerkabine zuführt, und der Vorreiniger mit mindestens zwei Auslässen versehen ist, wobei der eine Auslaß (94) Luft mit Schmutzpartikeln nach außen zur Atmosphäre und der andere Auslaß vorgereinigte Luft über den ersten Luftfilter (46) in das Gehäuse (40) leitet, der einen zweiten stromabwärts vom ersten Filter (46) ebenfalls im Gehäuse vorgesehenen, die aus der Fahrerkabine (16) in das Gehäuse (40) eintretende Luft aufnehmenden Luftfilter (60) aufweist, an den sich stromabwärts die Klimaeinrichtung (48) mit dem zweiten Gebläse (50) anschließt.

2. Vorrichtung nach Anspruch 1, dadurch gekennzeichnet, daß in dem Gehäuse (40) zur Aufnahme der Klimaeinrichtung das erste Gebläse (42) zum Ansaugen von Frischluft und daran anschließend der Vorreiniger (44) angeordnet sind und das zweite Gebläse (50) eine die Drehzahl des Gebläses verändernde Einrichtung sowie einen in das Innere der Fahrerkabine (16) hineinreichenden, mit der Verteilervorrichtung (52) verbundenen Auslaßstutzen aufweist.

3. Vorrichtung nach den Ansprüchen 1 und 2, dadurch gekennzeichnet, daß zwischen den beiden ersten dem Vorreiniger (44) nachgeschalteten Filtern (46, 60) und dem zweiten Gebläse (50) die Klimaeinrichtung (48) mit einem Kühler bzw. Verdampfer (54) und einer Heizung (56) vorgesehen ist.

4. Vorrichtung nach einem oder mehreren der vorherigen Ansprüche, dadurch gekennzeichnet, daß das erste Gebläse (42), der Vorreiniger (44), der erste Filter (46), die Klimaeinrichtung, das zweite Gebläse (50) sowie die Verteilervorrichtung (52) mit ihren Ein- und Auslässen in Strömungsrichtung gesehen hintereinander geschaltet sind.

5. Vorrichtung nach einem oder mehreren der vorherigen Ansprüche, dadurch gekennzeichnet, daß die Lufteinlaßöffnung (32) des ersten Gebläses (42) im oberen Bereich der Fahrerkabine (16) und die Auslaßöffnung zum Anschluß an die Verteilerleitung (52) stromabwärts vom zweiten Gebläse (50) angeordnet ist.

6. Vorrichtung nach einem oder mehreren der vorherigen Ansprüche, dadurch gekennzeichnet, daß das Gehäuse (40) zur Aufnahme des Vorreinigers (44), der beiden Filter (46, 60), der Klimaeinrichtung (48) und des zweiten Gebläses (50) auf dem Boden (10) der Fahrerkabine (16) hinter dem Fahrersitz (20) und im Bereich der Rückwand (12) angeordnet ist.

7. Vorrichtung nach einem oder mehreren der vorherigen Ansprüche, dadurch gekennzeichnet, daß der Vorreiniger (44) sich zur Auslaßöffnung verjüngt und zahlreiche mit dem Inneren des Gehäuses (40) in Verbindung stehende weitere Auslaßöffnungen (86) aufweist.

8. Vorrichtung nach einem oder mehreren der vorherigen Ansprüche, dadurch gekennzeichnet, daß das Gehäuse (40) aus einer Filterkammer (74) zur Aufnahme des Vorreinigers (44) und einer Mischkammer (62) mit Einlaßöffnungen zur Aufnahme der beiden Luftfilter (46, 60) gebildet ist, wobei in der Auslaßöffnung der Mischkammer (62) der Kühler (54) der Klimaeinrichtung (48) vorgesehen ist.

9. Vorrichtung nach einem oder mehreren der vorherigen Ansprüche, dadurch gekennzeichnet, daß das Gehäuse (40) aus einer oberen und einer unteren Gehäusehälfte besteht, die miteinander lösbar verbunden sind, wobei die untere Gehäusehälfte auf dem Boden (10) der Fahrerkabine (16) angeordnet ist.

10. Vorrichtung nach einem oder mehreren der vorherigen Ansprüche, dadurch gekennzeichnet, daß der Auslaßkanal des Vorreinigers (44) mit seiner Auslaßöffnung sich vertikal nach unten durch den Boden (10) der Fahrerkabine (16) erstreckt.

11. Vorrichtung nach Anspruch 8, dadurch gekennzeichnet, daß die Filterkammer (74) eine Einlaßklappe (76) aufweist.

12. Vorrichtung nach einem oder mehreren der vorherigen Ansprüche, dadurch gekennzeichnet, daß der Vorreiniger (44) zwischen zwei gegenüberliegenden Seitenwänden der Filterkammer (74) angeordnet ist, wobei der Einlaß des Vorreinigers in der oberen Wand und die Auslaßöffnung in der unteren als Boden (10) der Fahrerkabine (16) ausgebildeten Wand angeordnet ist.

13. Vorrichtung nach einem oder mehreren der vorherigen Ansprüche, dadurch gekennzeichnet, daß der Vorreiniger (44) im Bereich seiner Auslaßöffnung über ein Dichtelement (96) gegenüber dem Boden (10) abgedichtet ist.

**Claims**

1. Air supply apparatus (30) for the driver's cab (16) of a vehicle, having a first fan (42) for drawing in fresh air outside the driver's cab, an air conditioning system following the fan and formed by a cooler (54) and a heating unit (56), a second fan and a distributing device (52) which is provided inside the driver's cab, the fresh air drawn in being conducted via a precleaner following downstream of the first fan (42) and via at least one filter associated with the housing (40) of the air conditioning system (48), characterised in that the second fan (50) delivers conditioned air into the driver's cab and the precleaner is provided with at least two outlets, one outlet (94) conveying air containing dirt particles to the outside to the atmosphere and the other outlet conveying precleaned air via the first air filter (46) into the housing (40), which has a second air filter (60) likewise provided therein downstream of the first air filter (46) and receiving the air entering the housing (40) from the driver's cab (16), the second air filter being followed downstream by the air conditioning system (48) with the second fan (50).

2. Apparatus according to claim 1, characterised in that the first fan (42) for drawing in fresh air and, following it, the precleaner (44) are arranged in the housing (40) for accommodating the air conditioning system, and the second fan (50) has a device varying the speed of the fan and an outlet connection extending into the interior of the driver's cab (16) and connected to the distributing device (52).

3. Apparatus according to claims 1 and 2, characterised in that the air conditioning system (48) having a cooler or evaporator (54) and a heating unit (56) is provided between the first two filters (46, 60) arranged after the precleaner (44) and the second fan (50).

4. Apparatus according to one or more of the preceding claims, characterised in that the first fan (42), the precleaner (44), the first filter (46), the air conditioning system, the second fan (50) and the distributing device (52) have their inlets and outlets arranged in series as seen in the direction of flow.

5. Apparatus according to one or more of the preceding claims, characterised in that the air inlet vent (32) of the first fan (42) is arranged in the top zone of the driver's cab (16) and the outlet opening for connection to the distributing device (52) is arranged downstream of the second fan (50).

6. Apparatus according to one or more of the preceding claims, characterised in that the housing (40) for accommodating the precleaner (44), the two filters (46, 60), the air conditioning system (48) and the second fan (50) is arranged on the floor (10) of the driver's cab (16) behind the driver's seat (20) and in the region of the rear wall (12).

7. Apparatus according to one or more of the preceding claims, characterised in that the precleaner (44) tapers towards the outlet opening and has numerous additional outlet openings (86) in communication with the interior of the housing (40).

8. Apparatus according to one or more of the preceding claims, characterised in that the housing (40) is formed by a filtering chamber (74) for accommodating the precleaner (44) and a mixing chamber (62) with inlet openings for accommodating the two air filters (46, 60), the cooler (54) of the air conditioning system (48) being provided in the outlet opening of the mixing chamber (62).

9. Apparatus according to one or more of the preceding claims, characterised in that the housing (40) consists of an upper and a lower half which are disengageably connected to one another, the lower half of the housing being arranged on the floor (10) of the driver's cab (16).

10. Apparatus according to one or more of the preceding claims, characterised in that the outlet duct of the precleaner (44) and its outlet opening extend vertically downward through the floor (10) of the driver's cab (16).

11. Apparatus according to claim 8, characterised in that the filtering chamber (74) has an access flap (76).

12. Apparatus according to one or more of the preceding claims, characterised in that the precleaner (44) is arranged between two opposite side walls of the filtering chamber (74), the inlet of the precleaner being arranged in the top wall there of and the outlet opening in the bottom wall designed as the floor (10) of the driver's cab (16).

13. Apparatus according to one or more of the preceding claims, characterised in that the precleaner (44) is sealed off in the region of its outlet opening with respect to the floor (10) by means of a sealing element (96).

**Revendications**

1. Dispositif d'alimentation en air (30) pour la cabine de conduite (16) d'un véhicule, comportant un premier ventilateur (42) pour l'aspiration d'air frais à l'extérieur de la cabine de conduite, un dispositif de climatisation se raccordant au ventilateur et constitué par un radiateur (54) et un réchauffeur (56), un second ventilateur, ainsi qu'un dispositif de distribution ou de répartition (52) prévu à l'intérieur de la cabine de conduite, l'air frais aspiré étant acheminé en passant par un pré-épurateur se raccordant en aval du premier ventilateur (42) et au moins un filtre conjugué au carter (40) du dispositif de climatisation (48), caractérisé en ce que le second ventilateur (50) envoie de l'air climatisé dans la cabine de conduite, et en ce que le pré-épurateur comporte au moins deux sorties, l'une des sorties (94) acheminant de l'air chargé de particules de saleté vers l'extérieur en direction de l'atmosphère et l'autre sortie acheminant de l'air préépuré par l'intermédiaire du premier filtre à air (46) dans le carter (40), qui contient également un second filtre à air (60) prévu en aval du premier filtre à air (46), qui reçoit de l'air pénétrant dans le carter (40) à partir de la cabine de conduite (16), auquel le dispositif de climatisation (48) comportant le second ventilateur (50) se raccorde en aval.

2. Dispositif suivant la revendication 1, caractérisé en ce que le premier ventilateur (42) servant à l'aspiration de l'air frais et le pré-épurateur (44) raccordé à ce ventilateur sont disposés dans le carter (40) servant à la réception du dispositif de climatisation, le second ventilateur (50) comportant un dispositif faisant varier son régime de rotation, ainsi qu'un embout de sortie relié au dispositif répartiteur (52) et s'étendant jusqu'à l'intérieur de la cabine de conduite (16).

3. Dispositif suivant les revendications 1 et 2, caractérisé en ce que le dispositif de climatisation (48) comportant un radiateur ou évaporateur (54) et un réchauffeur (56) est prévu entre les deux premiers filtres (46, 60) placés en aval du pré-épurateur (44) et le second ventilateur (50).

4. Dispositif suivant une ou plusieurs des revendications précédentes, caractérisé en ce que le premier ventilateur (42), le pré-épurateur (44), le premier filtre (46), le dispositif de climatisation, le second ventilateur (50) ainsi que le dispositif répartiteur (52) sont, par leurs entrées et leurs sorties, montés en série l'un derrière l'autre si l'on considère la direction d'écoulement.

5. Dispositif suivant une ou plusieurs des revendications précédentes, caractérisé en ce que l'orifice d'entrée d'air (32) du premier ventilateur (42) est disposé dans la partie supérieure de la cabine de conduite (16) et en ce que l'orifice de sortie se raccordant au conduit de répartition (52) est disposé en aval du second ventilateur (50).

6. Dispositif suivant une ou plusieurs des revendications précédentes, caractérisé en ce que le carter (40) recevant le pré-épurateur (44), les deux filtres (46, 60), le dispositif de climatisation (48) et le second ventilateur (50) est disposé sur le plancher (10) de la cabine de conduite (16), derrière le siège (20) du conducteur et au voisinage de la paroi arrière (12).

7. Dispositif suivant une ou plusieurs des revendications précédentes, caractérisé en ce que le pré-épurateur (44) va en diminuant de section vers l'orifice de sortie et comporte de nombreux autres orifices de sortie (86) communiquant avec l'intérieur du carter (40).

8. Dispositif suivant une ou plusieurs des revendications précédentes, caractérisé en ce que le carter (40) est constitué par une chambre de filtration (74) pour la réception du pré-épurateur (44) et par une chambre de mélange (62) munie d'orifices d'entrée pour la réception des deux filtres à air (46, 60), le radiateur (54) du dispositif de climatisation (48) étant prévu dans l'orifice de sortie de la chambre de mélange (62).

9. Dispositif suivant une ou plusieurs des revendications précédentes, caractérisé en ce que le carter (40) est constitué par une moitié de carter supérieure et une moitié de carter inférieure, qui sont reliées amoviblement ensemble, la moitié de carter inférieure étant disposée sur le plancher (10) de la cabine de conduite (16).

10. Dispositif suivant une ou plusieurs des revendications précédentes, caractérisé en ce que le canal ou conduit de sortie du pré-épurateur (44) s'étend par son orifice de sortie verticalement vers le bas à travers le plancher (10) de la cabine de conduite (16).

11. Dispositif suivant la revendication 8, caractérisé en ce que la chambre de filtration (74) comporte un volet d'admission (76).

12. Dispositif suivant une ou plusieurs des revendications précédentes, caractérisé en ce que le pré-épurateur (44) est disposé entre deux parois latérales opposées de la chambre de filtration (74), l'entrée du pré-épurateur étant disposée dans la paroi supérieure et l'orifice de sortie étant prévu dans la paroi inférieure servant de plancher (10) pour la cabine de conduite (16).

13. Dispositif suivant une ou plusieurs des revendications précédentes, caractérisé en ce que le pré-épurateur (44) est, au voisinage de son orifice de sortie, rendu étanche par rapport au plancher (10) par l'intermédiaire d'un élément d'étanchéité (96).

1/3

*Fig. 1*

*Fig. 2*

Fig. 3

0 125 562

**Fig. 4**

**Fig. 5**

**Fig. 6**